(19) Europäisches Patentamt
European Patent Office
Office européen des brevets

(11) EP 2 072 459 A1

(12) **EUROPEAN PATENT APPLICATION**

(43) Date of publication:
24.06.2009 Bulletin 2009/26

(51) Int Cl.:
C01B 3/32 (2006.01)

(21) Application number: 08169549.6

(22) Date of filing: 20.11.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 21.11.2007 IT MI20072209

(71) Applicant: ENI S.p.A.
00144 Roma (IT)

(72) Inventors:
• Basini, Luca
20129 Milano (IT)
• Guarinoni, Alessandra
29100 Piacenza (IT)

(74) Representative: De Gregori, Antonella et al
Ing. Barzano' & Zanardo Milano S.p.A.
Via Borgonuovo 10
20121 Milano (IT)

(54) **Enhanced process for the production of synthesis gas starting from oxygenated compounds deriving from biomasses**

(57) The present invention relates to a catalytic partial oxidation process for the production of synthesis gas starting from oxygenated compounds deriving from biomasses, comprising at least the following operative phase: reacting, in a suitable reactor, a reaction mixture comprising:

a) one or more oxygenated compounds selected from glycerine, ethanol, triglycerides of fatty acids, carbohydrates having the general formula $C_n(H_2O)_nH_2$ and/or mixtures thereof, preferably glycerine and/or ethylene glycol, even more preferably glycerine, b) an oxidant selected from oxygen, air or air enriched with oxygen, c) optionally a hydrocarbon propellant or vapour, wherein the ratio of moles of molecular oxygen/carbon moles of the oxygenated compound plus that of the possible propellant ($O_2$/C) ranges from 0.20 to 0.60 mole/mole, said reaction being carried out at a temperature ranging from 450 to 1,100°C, at a pressure ranging from 1 to 50 ATM, with a GHSV (gas hourly space velocity) ranging from 10,000 to 1,000,000 Nl/(kg·h), in the presence of a catalyst comprising one or more transition metals on a solid carrier.

Fig. 5

EP 2 072 459 A1

**Description**

The present invention relates to a process for the production of synthesis gas starting from oxygenated compounds deriving from biomasses.

The present invention belongs to the technical field of the production of synthesis gas and hydrogen, starting from hydrocarbon compounds and oxygenated compounds. In particular, the present invention relates to a catalytic partial oxidation process (CPO) for the production of synthesis gas starting from hydrocarbon oxygenated compounds which can be obtained from biomasses, such as glycerine.

The production of "renewable" hydrocarbon fuels, i.e. fuels from biomasses, is rapidly increasing and is sustained by various factors. Among the most relevant, the following can be mentioned:

> i) the necessity of reducing the environmental impact of polluting industrial and motor vehicles emissions,
> ii) the political, social and economical necessity for promoting the diversification of primary energy sources,
> iii) high oil costs.

Renewable hydrocarbon fuels are obtained from "bio-masses", a term which indicates materials of a vegetable and animal origin, such as cellulose, lignin, starches, sugars, some proteins, as well as vegetable and animal oils (D.L. Klass, "Biomass for renewable Energy, Fuels and Chemicals, Academic Press, Sandiego 1998).

Vegetable oils consist, for about 98-99%, of triglycerides of fatty acids and, for the remaining part, of free fatty acids (1-2%). Triglycerides are linear chain hydrocarbons having a number of carbon atoms analogous to that of the hydrocarbons which can be obtained from oil (16-22 carbon atoms).

Vegetable oils can be transformed into diesel fuels through two processes which lead to two different types of final fuels: "green diesel" and "bio-diesel".

The process leading to the production of "green diesel" is based on the hydro-deoxygenation, decarbonylation and hydro-isomerization treatments of vegetable oil ("Green diesel production from vegetable oil"; T.L. Marker, Peter Kokayeff, Chris Gosling, Giovanni Faraci, Carlo Perego, 10th Topical Conference on Refinery Processing; 07 AiChe Spring National Meeting Houston, TX, April 23, 2007). This chemical process can be very effectively integrated in the refinery economy. Furthermore, the end-product, "green diesel" has a high octane number and can be mixed in any desired ratio with all other fuels for diesel engines produced by oil refineries.

In addition to the long-chain linear hydrocarbons contained in "green diesel", the hydrodeoxygenation of triglycerides produces propane, a hydrocarbon which can be effectively used within conventional refineries. The other by-products of the production reaction of "green diesel" are CO, $CO_2$ and $H_2O$.

The process which leads to the production of "bio-diesel", on the contrary, is based on the transesterification reaction of fatty acids contained in vegetable oils. The transesterification reaction with methanol of vegetable oils produces, as main products, methyl esters of fatty acids (normally called FAME - Fatty Acid Methyl Esters) and glycerine as by-product. The process can be schematically represented by the following chemical equation [1] (the ratios between the chemical species are expressed as volume):

$$100 \text{ Triglycerides} + 13 \text{ MeOH} \leftrightarrow 99 \text{ FAME} + 8 \text{ Glycerine} \qquad [1]$$

In the bio-diesel production process, glycerine is a by-product produced in significant quantities (about 1 ton (purity 95%) for every 10 tons of FAME). However, whereas FAMEs are high-quality diesel fuels, glycerine cannot be used as fuel due to its poor caloric power (4,315 kcl/kg).

In consideration of the rapid development of the production of bio-fuels and consequently the high availability of glycerine at increasingly reduced costs, in addition to the increasing consumption of $H_2$ in industrial processes (in the production of ammonia and methanol, for example, or in oil refining), the possibility of using this compound for producing synthesis gas is now being studied.

From a chemical point of view, in fact, each molecule of glycerine can be decomposed into three molecules of CO and 4 molecules of $H_2$, according to reaction [2]. In the presence of $H_2O$ the decomposition of glycerine can be joined to the Water Gas Shift (WGS) reaction [3] and obtain higher quantities of $H_2$ according to equation [4].

$$(CH_2OH)_2CHOH \leftrightarrow 3CO + 4H_2 \; \Delta H° = +60 \text{ kcal/mole} \qquad [2]$$

$$CO + H_2O \leftrightarrow CO_2 + H_2 \; \Delta H° = -9.8 \text{ kcal/mole} \qquad [3]$$

$$(CH_2OH)_2CHOH + 3 H_2O \leftrightarrow 3 CO_2 + 7 H_2 \; \Delta H° = +30.6 \text{ kcal/mole} \qquad [4]$$

From a thermodynamic point of view, moreover, the Steam Reforming (SR) process of glycerine (equation [4]) is less unfavourable than the methane SR process (equation [5]), which is the method that is most widely used industrially for producing $H_2$.

$$CH_4 + H_2O \leftrightarrow CO + 3\ H_2\ \Delta H° = + 46.3\ kcal/mole \qquad [5]$$

Approximately 96% of the $H_2$ produced industrially is currently obtained through the SR process of Natural Gas (NG) and light naphthas, and the remaining 4% is produced through the non-catalytic partial oxidation (PO) process of oil processing residues (L. Basini, "Issues in H2 and Synthesis Gas Technologies for Refinery, GTL and Small and Distributed Industrial Needs", Catalysis Today, 2005, 106, 34-40).

Both SR and non-catalytic PO produce synthesis gas, which is a mixture of $H_2$ and CO with minor amounts of $CH_4$ and $CO_2$. Pure $H_2$ can be obtained from synthesis gas by means of a WGS passage and subsequent separation/purification of $H_2$.

A third technology for the production of synthesis gas is Autothermal Reforming (ATR). ATR can only use highly desulphurized natural gas and is widely used for producing synthesis gas for the methanol synthesis processes, oxosynthesis and Fischer-Tropsh, whereas it is not used for producing pure $H_2$.

The characteristics of SR, non-catalytic PO and ATR are described in various documents in literature, among which i) J.R Rostrup-Nielsen, J. Sehested, J.K. Noskov. Adv. Catal. 2002, 47, 65-139; ii) R. Pitt, World Refining, 2001, 11(1), 6; iii) I. Dybkjaer, Petroleum Economist: Fundamental of Gas to Liquids, 1993, 47-49; iv) T. Rostrup-Nielsen, Catalysis Today, 2005, 106 (1-4), 293-296; v) J. Rostrup-Nielsen, 2002, 71 (3-4), 243-247, can be mentioned.

SR is a very efficient technology from an energy point of view and produces $H_2$ from a light gaseous hydrocarbon feedstock (typically, natural gas, but also light naphthas), after being desulphurized through highly endothermic reactions. The heat necessary for the reactions is generated inside an oven which includes "reforming tubes"; these tubular reactors are filled with an Ni-based catalyst deposited on a carrier typically consisting of mixed oxides of Mg and Al. SR ovens having larger dimensions can house about 600 reforming tubes (with a diameter of between 100 and 150 mm and a length of 10 to 13 m) and can produce synthesis gas in a single line from which over 250,000 $Nm^3$/hour of $H_2$ can be obtained.

Even though the technology used for effecting the SR process of desulphurated natural gas and light hydrocarbons is extremely efficient from an energy point of view, the plants used for this purpose cannot be fed with oxygenated compounds such as glycerine. The majority of oxygenated compounds would in fact decompose during the evaporation and gasification processes, forming carbonaceous residues which could prevent the functioning of the plants.

Neither does the technology used for effecting non-catalytic PO processes appear to be an economically convenient solution in the case of oxygenated compounds from bio-masses.

The non-catalytic PO process for producing $H_2$ is represented by the equations [6] and [3] :

$$C_nH_m + (n/2 + m/4)O_2 \leftrightarrow n\ CO + m/2\ H_2O \qquad [6]$$

$$CO + H_2O \leftrightarrow CO_2 + H_2 \qquad [3]$$

This process is characterized by a low energy efficiency and high production costs and consequently therefore it can only be advantageously applied in the case of hydrocarbon feedstocks consisting of heavy hydrocarbon residues from oil treatment which cannot be transformed into synthesis gas with techniques of the catalytic type. The high costs of this technology are caused: (i) by the necessity of feeding the reactors with streams of reagents pre-heated to a high temperature (about 550°C), (ii) by the high temperatures of the synthesis gas produced at the outlet of the reactors (about 1,400°C), which makes the thermal recovery operations complex and quite inefficient, and (iii) by the high oxygen consumptions. The PO process has the advantage of being fed both with gaseous and liquid feedstocks and becomes economically advantageous when low value hydrocarbon feedstocks are used, (petroleum coke, deasphalted pitches, residual oils, etc..) in high-capacity plants.

The competitiveness and diffusion of PO is favoured by the high costs of NG, by the necessity of treating heavy crude oils, and by the possibility of integrating the $H_2$ and energy production with combined cycles (IGCC) (G. Collodi, Hydroc. Eng. 2001, 6(8), 27).

The ATR technology combines sub-stoichiometric gaseous processes (eq. [7], with catalytic SR processes (eq. [5]) which take place in an area below the combustion chamber:

$$CH_4 + 3/2\ O_2 \leftrightarrow CO + 2\ H_2\ O \qquad [7]$$

$$CH_4 + H_2O \leftrightarrow CO + 3\ H_2 \qquad [5]$$

This technology however is also characterized by a high consumptions of energy (due to the production of vapour) and oxygen and consequently it is not economically advantageous for producing synthesis gas and $H_2$ starting from glycerine or other oxygenated compounds. The ATR process (ATR - Ib Dybkjaer, Hydrocarbon Engineering, 2006, 11(7), 33-34, 36) is in fact fed with gaseous streams with ratios of "vapour moles/hydrocarbon carbon atom moles" (S/C) ranging from 0.6 to 1.5 and ratios of "molecular oxygen moles/ hydrocarbon carbon atom moles" ($O_2$/C) over 0.55. Under these conditions, the oxygen consumption expressed in terms of the $O_2$ mol/ (CO mol + $H_2$ mol) ratio is over 0,23.

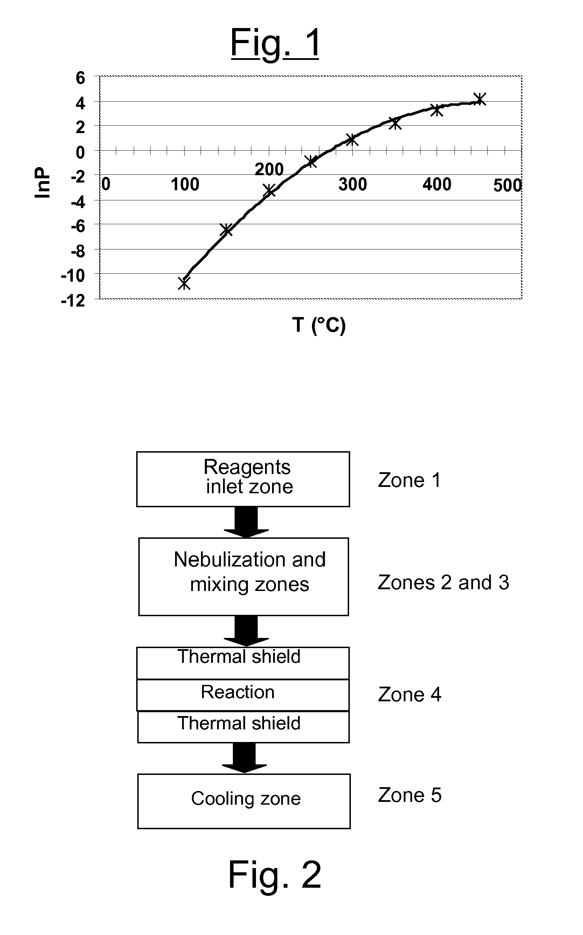

In the state of the art, the $H_2$ production process starting from oxygenated compounds obtained from bio-masses is also known and is described in US2005/0207971A1 (US'971) and US2004/0022723A1 (US'723). The process of US'971 and US'723 essentially consists of the catalytic SR of oxygenated compounds obtained from biomasses, soluble in water (alcohols, glycols, polyalcohols, sugars, starches, etc..). The process, which can be effected both in vapour phase and condensed phase, is effected under thermodynamic conditions and with devices very different from those of traditional SR technologies of light hydrocarbons. The SR reaction according to US'971 and US'723, for example, is carried out at temperatures ranging from 100 to 450°C, whereas the temperatures at the outlet of the SR tubes of the synthesis gas in traditional industrial processes which produce $H_2$ from natural gas and light naphthas are higher than 850°C. Furthermore, as the oxygenated compounds produced from biomasses have very low vapour pressures, the reforming can be effected in aqueous liquid phase, also at atmospheric pressure (Figure 1). Figure 1 shows that the vapour pressure of glycerine is lower than 1 Atm at temperatures lower than 280°C.

The SR process of oxygenated compounds indicated in US'971 and US'723, however, has the problem that it can only be effected in plants having a small productive capacity, consequently resulting in a process suitable for preparing $H_2$ for small applications (for example, for combustion cells). The space velocity values (eq. [8]) indicated in US'971 and US'723, in fact, vary from 70 to 270 Nl/kg·hr, i.e. they are 1-2 orders of magnitude lower than that of traditional industrial SR processes of hydrocarbons.

$$\text{GHSV (gas hourly space velocity)} = Nl_{reagents}/kg_{catalyst} \cdot hr)$$

The traditional SR technologies of hydrocarbons, on the other hand, operate at a GHSV of around 1,500 and with S/C ratios ranging from 2.0 to 3.5 mole/mole; whereas ATR typically operates at a GHSV of 10,000 and with S/C ratios between 0.6 and 1.5 mol/mol. As the GHSV values are in inverse proportion with the dimensions of the reactors, in order to obtain a reduction in the GHSV of one or two orders of magnitude, such as that envisaged in US'971 and US'723, it would be necessary to increase the dimensions of the industrial reactor by one or two orders of magnitude to maintain adequate production capacities. This increase in dimensions and in the relative quantities of catalyst, could not be effected in large capacity plants, due to both mechanical restrictions on the dimensions of the reactors and also for economical reasons. Furthermore, whereas the technology described in US' 971 and US' 723 uses aqueous solutions of oxygenated hydrocarbons wherein the S/C ratios are much higher than the stoichiometric values, in production technologies of synthesis gas and hydrogen it is extremely important to maintain the quantity of vapour fed as close as possible to the stoichiometric requirements, as its generation and use influence both the operative and plant construction costs.

The low-temperature and low-pressure SR of oxygenated compounds described in US'971 and US'723 is therefore advantageous from the point of view of the reaction temperatures and starting products, but it is not adequate for effecting large-scale productions, such as those necessary, for example, for satisfying the hydrogen requirements in refinery processes or for exploiting the high quantity of glycerine that can be obtained from production processes of bio-diesel starting from biomasses.

The objective of the present invention is therefore to find a process for the production of synthesis gas and hydrogen which overcomes the above-mentioned drawbacks of the state of the art. In particular, the objective of the present invention is to find a process which can use glycerine and other oxygenated compounds as starting hydrocarbon for producing synthesis gas on a large scale, with low consumptions of energy and reagents.

An object of the present invention relates to a catalytic partial oxidation process for producing synthesis gas starting from oxygenated compounds deriving from bio-masses, comprising at least the following operative phase:

reacting, in an suitable reactor, a reaction mixture comprising:

a) one or more oxygenated compounds selected from glycerine, ethanol, tri-glycerides of fatty acids, carbohydrates having the general formula $C_n(H_2O)nH_2$ and/or mixtures thereof, preferably glycerine and/or ethylene glycol, even more preferably glycerine,
b) an oxidant selected from oxygen, air, air enriched with oxygen,
c) optionally a hydrocarbon propellant or vapour,

wherein the ratio of moles of molecular oxygen/moles of carbon of the oxygenated compound plus that of the possible

propellant ($O_2$/C) varies from 0.20 to 0.60 mol/mol,

said reaction being effected at a varying temperature ranging from 450 to 1,100°C and a pressure varying from 1 to 50 ATM, with a GHSV (hourly space velocity) of between 10,000 and 1,000,000 Nl/(kg·hr), in the presence of a catalyst comprising one or more transition metals on a solid carrier.

The process according to the present invention allows the production of synthesis gas through the low-temperature CPO of oxygenated compounds. The oxygenated compounds which can be used for the purposes of the present invention comprise oxygenated compounds, ethanol, tri-glycerides of fatty acids, glycerine, carbohydrates having the general formula $C_n(H_2O)nH_2$ and/or mixtures thereof.

The process preferably uses, as starting oxygenated compounds, glycerine, ethanol and ethylene glycol, more preferably glycerine. The glycerine to be sent to the production process of synthesis gas can, for example, be that obtained as by-product of production processes of biofuels.

The oxidant present in the reaction mixture is selected from a stream of pure oxygen, air, air enriched in oxygen and/or mixtures thereof, preferably enriched air in which the concentration of oxygen ($O_2$) preferably varies from 40 to 60% v/v of the oxidant stream. The oxidant is preferably present in such a concentration that the ratio of "moles of molecular oxygen/carbon moles of the oxygenated compound plus that of the possible propellant" ($O_2$/C) in the reaction mixture varies from 0.20 to 0.60 mol/mol, more preferably from 0.25 to 0.55 mol/mol.

The reaction mixture can optionally comprise one or more hydrocarbon propellants or vapour. The hydrocarbon propellant can consist of a gaseous hydrocarbon (for example, natural gas), a mixture of gaseous hydrocarbons (for example a refinery fuel gas) or a mixture of liquid hydrocarbons which, under the reaction conditions, are transformed into gaseous hydrocarbons (for example LPG or naphtha). The vapour and propellant are used as gaseous streams in the injection device of the liquid oxygenated compound into the reaction mixture for the purpose of facilitating the nebulization of the latter. The vapour is also used for diluting the oxidant stream, thus diminishing the risk of triggering gaseous homogeneous combustion reactions.

The hydrocarbon propellant is preferably present in such a concentration that the ratio of "carbon moles of propellant/carbon moles of oxygenated compound" ($C_{propellant}/C_{ox}$) in the reaction mixture varies from 0 to 2, more preferably from 0 to 1 mol/mol.

In the case of vapour, its concentration is preferably such that the ratio of "moles of vapour/moles of carbon oxygenated compound plus that of the possible propellant" (S/C) in the reaction mixture varies from 0.10 to 1.5 (mole/mole), more preferably from 0.15 to 0.80 mol/mol.

If glycerine is used as starting oxygenated compound, the partial oxidation reaction which takes place by applying the process according to the present invention, is the following (the ratios among the species are expressed as moles):

$$C_3H_8O_3 + 0.49 \ O_2 \leftrightarrow 2.56 \ CO + 3.46 \ H_2 + 0.44 \ CO_2 + 0.54 \ H_2O \ \Delta H°= - 0.9 \ kcal/mol \qquad [9]$$

Equation [9] indicates that a small quantity of oxygen is sufficient for compensating the endothermic nature of the reactions [2] and [4].

It has been observed that it is possible to sustain the catalytic partial oxidation reaction in an adiabatic reactor, consuming slightly less than 0.08 molecules of oxygen for each mole of synthesis gas produced. These consumptions are much lower with respect to those of the non-catalytic PO and ATR technologies used for producing synthesis gas. In the process according to the present invention, the reaction takes place at a pressure varying from 1 to 50 ATM, preferably between 2 and 30 ATM and at a temperature ranging from 450 to 1,100°C. The reaction is characterized by short contact times, in the order of 1 - 100 ms. The reaction mixture is passed into the reactor at a space velocity (GHSV) of 10,000 to 1,000,000 Nl/kg·hr, preferably from 20,000 to 500,000 Nl/kg·hr.

In order to effect the process according to the present invention, a reaction system can be conveniently used, consisting of a reactor in which the main parts of which it is formed can be schematically subdivided into the following zones (Figure 2):

Zone 1:    reagent inlet zone;
Zone 2:    nebulization/vaporization zone of the oxygenated compounds;
Zone 3     mixing zone of the oxygenated compounds with the other reagent streams;
Zone 4:    reaction zone;
Zone 5:    cooling zone of the reaction products.

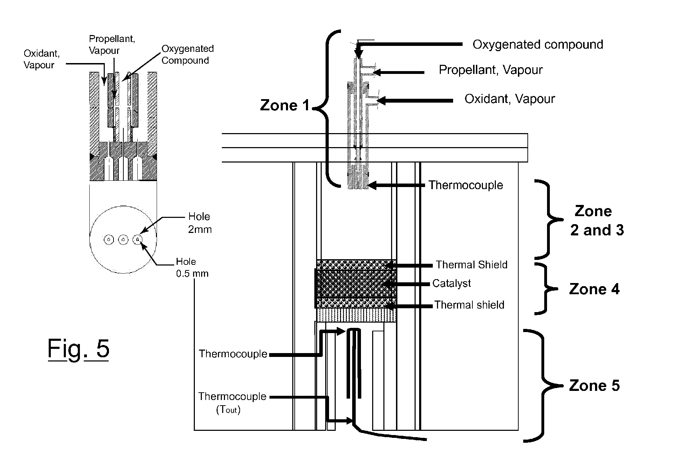

With reference to figures 2 and 5, the function of each zone of the reactor is described hereunder.

Zone 1 of the reagent inlet, preferably includes separated inlets for the oxidizing stream, the stream of oxygenated compound and the possible hydrocarbon propellant or vapour. The vapour can also be fed both with the hydrocarbon propellant and with the oxidizing stream. In this area the reagents can also be subjected to a preheating treatment. In zone 2 of the reactor the nebulization/vaporization takes place of the oxygenated compound deriving from biomasses. The nebulization/vaporization can be effected using a device analogous to that described in WO200634868A1, wherein the oxygenated hydrocarbon compound, after the possible addition of a gaseous propellant, is pumped under high pressure into the nebulization/vaporization chamber, through a small orifice. For the purposes of the present invention, the nebulization/vaporization of the oxygenated compound can also be obtained by means of any other device, in the absence or in the presence of a gaseous propellant.

Zone 3 for the mixing of the reagents is the area in which the streams of oxygenated compound, oxidizing compound and propellant are homogenized to minimize the composition gradients at the inlet of the subsequent Zone 4. In Zone 3, depending on the temperature and operating pressure, the partial or total vaporization of the oxygenated hydrocarbon compound can take place.

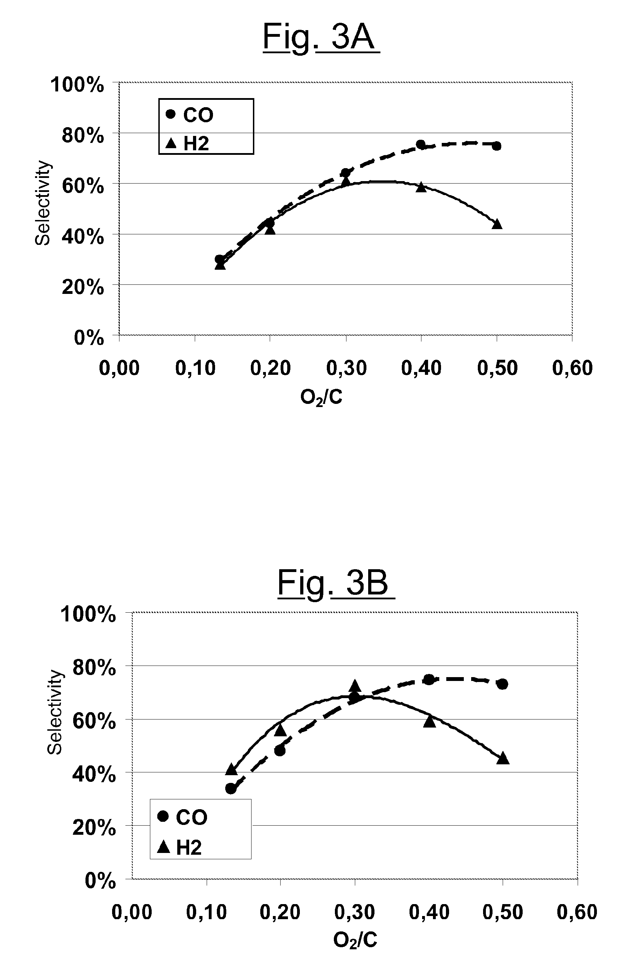

In Zone 4, the reaction mixture, upon entering into contact with the catalyst at the pre-established temperature and pressure, is transformed into synthesis gas. Zone 4 can be delimited by one or more thermal shields which confine the reaction heat and prevent its dispersion towards the mixing Zone 3 or subsequent Zone 5 for the cooling of the reaction products (Figure 3 shows a reactor with only one thermal shield).

The presence of thermal shields favours the maintenance of the reaction temperature, which can be regulated through the definition of suitable feeding ratios of the reagents. With the other reaction conditions remaining unaltered (for example, temperature, pressure, etc.), in fact, the conversion degree of the oxygenated compounds into synthesis gas and consequently the reaction heat developed, depends on the feeding ratio of the reagents. This ratio can be regulated so as to obtain, if necessary, the complete conversion to $CO_2$ and $H_2O$ of part of the oxygenated compound present in the reaction mixture. Furthermore, when a propellant of the hydrocarbon type is fed together with the oxygenated compound, the reaction temperature can be regulated by modulating the total oxidation of the latter. By suitably dosing the reagents in the process according to the present invention, it is therefore possible to obtain, through a suitable combination of total and partial combustion reactions, a temperature rise of the reaction zone so as to favour the production of synthesis gas with a high content of $H_2$ and CO and with a low oxygen consumption.

Figures 3A and 3B show the effects induced by the variation in the $O_2/C$ ratio in the reaction mixture on the selectivities to CO and $H_2$ of the CPO reaction of glycerine, in the presence of two different quantities of vapour (the data shown in Figures 3A and 3B refer to the adiabatic equilibrium conditions under the operating conditions indicated).

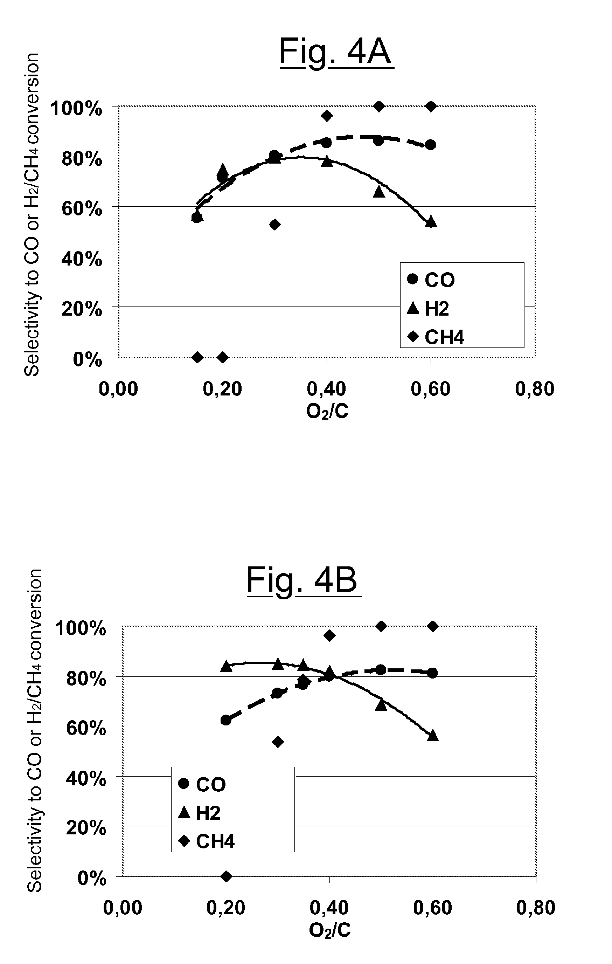

Figures 4A and 4B, on the other hand, show the effects induced by the variation in the $O_2/C$ ratio in the reaction mixture on the selectivities to CO and $H_2$ of the CPO reaction of glycerine, in the presence of methane as propellant and in the presence of two different quantities of vapour (the data shown in Figures 4A and 4B refer to the adiabatic equilibrium conditions under the operating conditions indicated).

Finally, the reactor comprises Zone 5 in which the reaction products are subjected to rapid cooling in order to inhibit methanation [10] and disproportioning [11] reactions of the carbon monoxide present in the synthesis gas:

$$CO + 3\,H_2 \leftrightarrow CH_4 + H_2O \qquad [10]$$

$$2\,CO \leftrightarrow CO + C \qquad [11]$$

The CPO process according to the present invention allows synthesis gas to be obtained, which can be subsequently used as starting mixture for producing $H_2$. For this purpose, the synthesis gas is subjected to WGS passages and subsequent separation/purification of the $H_2$.

The catalyst used for the purposes of the present invention can be any catalyst suitable for catalyzing partial oxidation reactions of oxygenated hydrocarbon compounds, selected from those already known to experts in the field. The catalyst preferably comprises active catalytic species containing one or more types of transition metals selected from Ni, Co, Fe, Cu, Rh, Ru, Ir, Pt, Pd and Au and/or mixtures thereof, preferably rhodium.

The catalyst is prepared by depositing, with various methods, the metals onto the carriers consisting of oxide compounds, such as aluminum oxides, mixed aluminum and magnesium oxides, and in general oxide compounds with a high thermal and mechanical resistance, such as perovskites, pyrochlores, zirconium, cerium and lanthanum oxides. The carriers can also consist of nitrides and oxynitrides or carbides and oxycarbides containing silicon and/or transition metals.

Alpha-alumina is the preferred carrier. The oxide carriers, carriers consisting of nitrides and oxynitrides, carbides and oxycarbides, can be prepared in various forms, such as for example, discreet spheroidal or cylindrical particles or they can be foamy or honeycomb monolith supports. The carriers which can be used for the purposes of the present invention also comprise those consisting of metallic Iron-Chromium alloys (for example the alloy "FeCrAlloy"). These metallic carriers can be in the form of nets, honeycomb monoliths, foamy monoliths or alternatively they can be obtained by joining corrugated metallic sheets so as to form other geometries. Structured catalytic systems of this type are described, for example, in i) Cybulski and J.A. Mulijn, "Structured Catalysts and Reactors"; Series Chemical Industries, 2006, Vol. 110; Taylor and Francis CRC Press, ii) G. Groppi, E. Tronconi; "Honeycomb supports with high thermal conductivity for gas/solid chemical processes, "Catalysis Today, Volume 105, Issues 3-4, 15 August 2005, Pages 297-304.

The process according to the present invention is preferably carried out with a rhodium-based catalyst, supported on alpha-alumina.

The active catalytic species can be generated and/or deposited on the above carriers with various methods, sometimes after chemical pre-treatment of the surface of the carrier. This pre-treatment has the purpose of improving or favouring the anchorage of the active species to the carrier. One of the most widely-used pre-treatment techniques is "washcoating", which consists in generating oxide layers on the surface of the carrier. Another technique which can be used, in particular for metallic carriers is "chemical leaching", which consists in removing part of the surface metallic species by means of acid or base solutions, generating oxide layers which allow a better anchorage of the active catalytic species, without weakening or altering the macrostructure of the monolith support (L. Giani, C. Cristiani, G. Groppi, E. Tronconi; Applied Catalysis B: Environmental 62 (2006) 121-131).

The active catalytic species comprising metals can be deposited, for example, through "impregnation" processes of the carriers with aqueous solutions of inorganic salts of the metals. Alternatively, the deposition can take place through solid-liquid reactions effected by putting the surface of the carrier in contact with solutions of organometallic compounds in an organic solvent (US 5, 336, 655) .

The content of metals in the catalyst varies from 0.1 to 5% by weight with respect to the total weight of the catalyst (carrier + metal), preferably from 0.5 to 2%.

The process according to the present invention has various significant advantages with respect to the known production processes of synthesis gas in the state of the art.

With the process according to the present invention, it is in fact possible to obtain the conversion of oxygenated hydrocarbon compounds into synthesis gas operating at moderate temperatures and with lower consumptions of reagents ($O_2$) and energy (vapour) with respect to the state of the art. In particular, the process allows synthesis gas to be produced starting from glycerine, thus proving to be particularly suitable for upgrading by-products of bio-diesel production reactions. A further advantage of the present invention is that the process can be conveniently carried out in high-capacity production plants, as they can be effected at high space velocities. This characteristic consequently makes the present invention suitable for increasing the availability of $H_2$ in the oil refining industry, with much lower investment costs. Furthermore, with the same production capacity of the plants, the process according to the present invention makes it possible to operate with reactors having dimensions one or two orders of magnitude lower with respect to those of the reactors used for the SR, PO and ATR technologies.

The following embodiment examples are provided for purely illustrative purposes of the present invention and should not be considered as limiting the protection scope defined by the enclosed claims.

Examples

Reaction system

The reaction system used for effecting all the reactivity tests consists of a reactor equipped with a nebulization/ vaporization device of liquid streams analogous to that described in W0200634868A1. This device allows oxygenated compounds to be fed in the liquid state which, after nebulization/vaporization, can be mixed with the other gaseous streams in Zone 3 creating a biphasic mixture to be sent to the reaction zone (Zone 4).

The catalytic bed (Zone 4) consists of spheres of alpha-$Al_2O_3$ on which active catalytic species were deposited by solid-liquid reaction between the same alumina spheres and a solution of $Rh_4(CO)_{12}$ in n-hexane. After the reaction and moderate drying, the spheres of catalyst containing 0.8% by weight of Rh were used directly in the reaction environment. The quantity of catalyst present in the catalytic bed is equal to approximately 20 g. The catalytic bed is positioned between two layers of alpha-$Al_2O_3$ spheres (thickness equal to 5 mm and 10 mm respectively) which act as thermal shields. The thermal shields and catalyst are kept in position by a cordierite device having a honeycomb geometry. In all the reactivity tests described hereunder the same catalyst was used, as the necessity never arose of having to substitute it due to deterioration of the catalytic activity or deposition phenomena of carbonaceous residues. The catalyst covered a total of 402 reaction hours. Inside the reactor, the temperature was monitored by three thermocouples respectively positioned on the injector/mixer at 106 mm ($T_{IN}$ - Zone 3) from the catalyst and 32 ($T_{OUT}$) and 132 mm ($T_{OUT}$) at the outlet of the catalytic bed. The analysis of the reaction products was effected by removing an aliquot of the effluent leaving the cooling zone (Zone 5) and sending it to two stationary GCs (the first equipped with a an FID-type detector and the second with a TCD-type detector, model 6890 HP) for online analysis, of the hydrocarbons and fixed gases ($CO$, $CO_2$, $CH_4$, $N_2$, $O_2$, $H_2$) respectively. A microGC (Varian) was used for monitoring the catalytic performance in the transients, i.e. in the start-up, shut-down and modification phases of the operating conditions.

At the beginning of each test, the reaction system was brought to the desired reaction conditions by feeding the streams of methane, vapour and oxidizing compound (consisting of air enriched with oxygen). Once stationary conditions had been reached, the feeding of the oxygenated compound was started.

All the reactivity tests were carried out at a pressure of 5 ATM and were prolonged for at least consecutive 24 h, in which no deterioration phenomena of the catalytic performance were observed.

The reaction conditions and reactivity parameters measured in each test are indicated in Tables 1-5. The flow-rate of the oxygenated compound indicated in the examples refers to the flow of liquid oxygenated compound fed to the nebulization/vaporization device.

The oxygen consumption in the reaction refers to the synthesis gas produced and is expressed as mol $O_2$/(mol $CO$ + mol $H_2$).

Example 1

Table 1 shows the reaction conditions and reactivity parameters measured for tests 1A and 1B. In both tests, the conversion of the glycerine and oxygen proved to be complete.

The tests showed that an increase in the conversion of methane and selectivity of the reaction towards the products $CO$ and $H_2$ corresponds to an increase in the $O_2$/C ratio.

Table 1

| Reaction conditions | Test 1A | Test 1B |
|---|---|---|
| $C_{methane}/C_{glycerine}$ (mol/mol) | 1.24 | 1.24 |
| $T_{IN}$(°C) | 186 | 187 |
| Pressure (ATM) | 5 | 5 |
| Glycerine flow-rate (ml/min) | 7 | 7 |
| $O_2$/C (mol/mol) | 0.36 | 0.4 |
| S/C (mol/mol) | 0.17 | 0.17 |
| GHSV (Nl/kg*h) | 80,000 | 80,000 |
| $O_2$ in enriched air (%) | 50 | 50 |
| Reactivity parameters | | |
| $T_{OUT}$ (°C) | 645 | 722 |
| $CH_4$ conversion (%) | 49.6 | 61.3 |
| CO selectivity (%) | 63.9 | 67.7 |
| $H_2$ selectivity (%) | 83.3 | 83.8 |
| $O_2$ consumed (mol/mol) | 0.26 | 0.25 |

Example 2

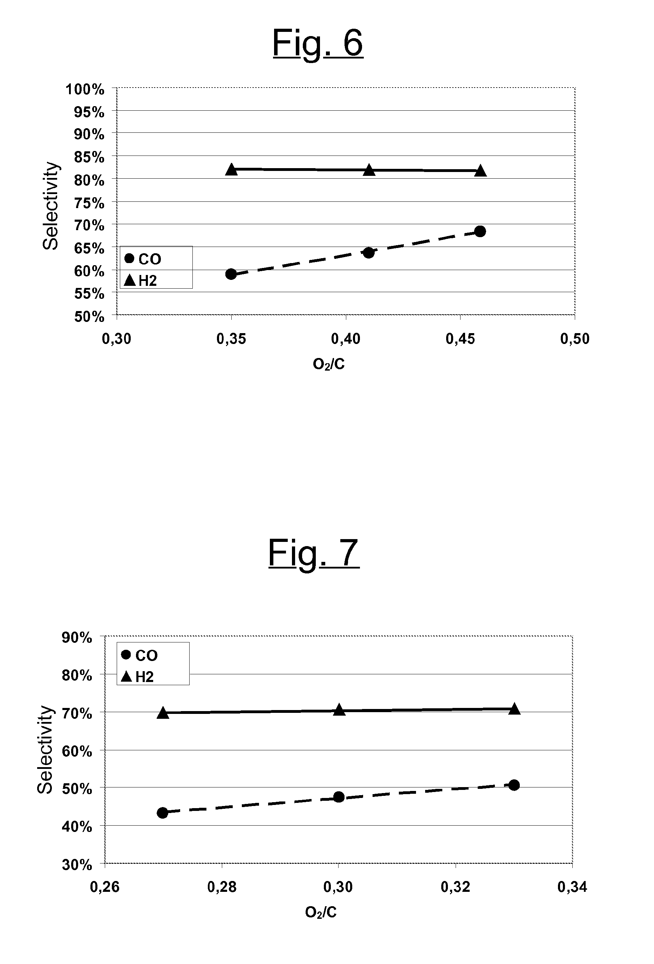

Table 2 shows the reaction conditions and reactivity parameters measured for tests 2A-2C. In all tests, the conversion of the glycerine and oxygen proved to be complete. The selectivity values observed for the components CO and $H_2$ of the synthesis gas produced in relation to the $O_2$/C ratio in the reagent mixture are indicated in Figure 6.

The tests showed that an increase in the conversion of methane and selectivity with respect to CO corresponds to an increase in the $O_2$/C ratio, whereas the selectivity with respect to $H_2$ remains practically constant.

Table 2

| Reaction conditions | Test 2A | Test 2B | Test 2C |
|---|---|---|---|
| $C_{methane}/C_{glycerine}$ (mol/mol) | 0.78 | 0.78 | 0.78 |
| $T_{IN}$ (°C) | 186 | 187 | 186 |
| Pressure (ATM) | 5 | 5 | 5 |
| Glycerine flow-rate (ml/min) | 7 | 7 | 7 |
| $O_2$/C (mol/mol) | 0.35 | 0.41 | 0.46 |
| S/C (mol/mol) | 0.22 | 0.22 | 0.22 |
| GHSV (Nl/kg*h) | 62,000 | 63,000 | 64,000 |
| $O_2$ in enriched air (%) | 45 | 45 | 45 |

(continued)

| Reactivity parameters | | | |
|---|---|---|---|
| $T_{OUT}$ (°C) | 691 | 722 | 761 |
| $CH_4$ conversion (%) | 43.2 | 63.6 | 81.8 |
| CO selectivity (%) | 58.8 | 63.6 | 68.2 |
| $H_2$ selectivity (%) | 82.1 | 81.9 | 81.8 |
| $O_2$ consumed (mol/mol) | 0.26 | 0.26 | 0.25 |

Example 3

The tests 3A-3C relate to tests in which vapour is added to the reaction mixture as propellant for the glycerine, in a quantity equal to S/C = 0.20 mol/mol. Table 3 indicates the reaction conditions and reactivity parameters measured for tests 3A-3C. In all the tests, the conversions of the glycerine and oxygen proved to be complete. The selectivity values observed for the components CO and $H_2$ of the synthesis gas produced in relation to the $O_2$/C ratio in the reagent mixture are indicated in Figure 7. The tests showed that an increase in the selectivity with respect to CO corresponds to an increase in the $O_2$/C ratio, whereas the selectivity with respect to $H_2$ remains practically constant.

Table 3

| Reaction conditions | Test 3A | Test 3B | Test 3C |
|---|---|---|---|
| $C_{methane}/C_{glycerine}$ (mol/mol) | 0 | 0 | 0 |
| $T_{IN}$ (°C) | 160 | 160 | 160 |
| Pressure (ATM) | 5 | 5 | 5 |
| Glycerine flow-rate (ml/min) | 20 | 20 | 20 |
| $O_2$/C (mol/mol) | 0.27 | 0.30 | 0.33 |
| S/C (mol/mol) | 0.20 | 0.20 | 0.20 |
| GHSV (Nl/kg*h) | 64,000 | 66,000 | 68,000 |
| $O_2$ in enriched air (%) | 45 | 45 | 45 |
| Reactivity parameters | | | |
| $T_{OUT}$ (°C) | 661 | 682 | 702 |
| $CH_4$ conversion (%) | 19.9 | 15.1 | 10.8 |
| CO selectivity (%) | 43.2 | 47.3 | 50.5 |
| $H_2$ selectivity (%) | 69.7 | 70.5 | 70.7 |
| $O_2$ consumed (mol/mol) | 0.27 | 0.27 | 0.27 |

Example 4

Tests 4A-4C refer to tests in which the starting oxygenated compound is ethanol. The ethanol was fed in liquid form to the nebulization/vaporization device, using a mixture of methane and vapour as propellant. The ratio between the moles of gaseous hydrocarbon propellant (methane) and those of the ethanol (expressed by the parameter $C_{CH4}/C_{ethanol}$) was kept equal to 0.50 mol/mol.

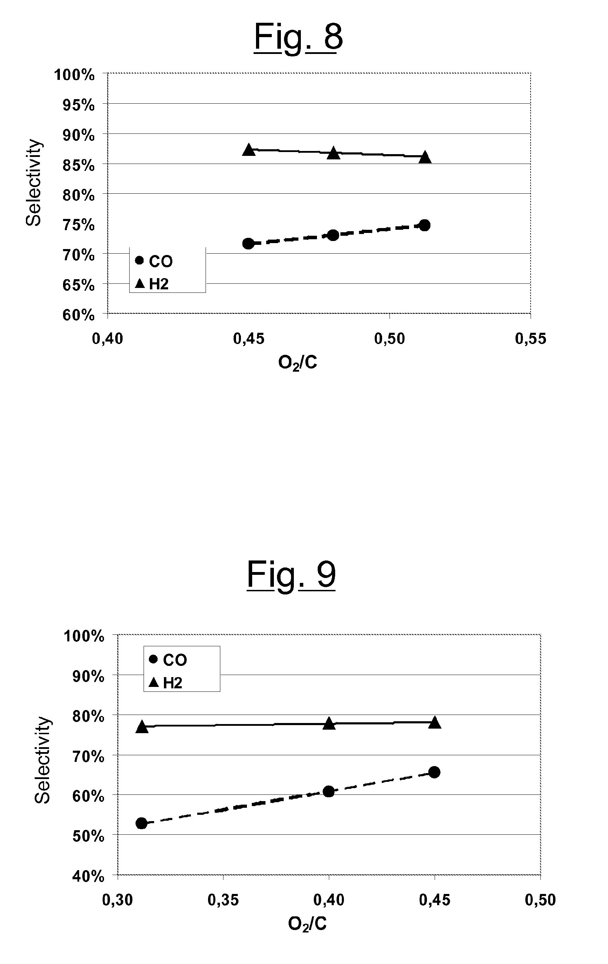

Table 4 indicates the reaction conditions and reactivity parameters measured for tests 4A-4C. In all the tests, the conversions of the ethanol and oxygen proved to be complete. The selectivity values observed for the components CO and $H_2$ of the synthesis gas produced in relation to the $O_2$/C ratio in the reagent mixture are indicated in Figure 8. The tests showed that an increase in the selectivity with respect to CO corresponds to an increase in the $O_2$/C ratio, whereas the selectivity with respect to $H_2$ decreases.

Table 4

| Reaction conditions | Test 4A | Test 4B | Test 4C |
|---|---|---|---|
| $C_{methane}/C_{ethanol}$ (mol/mol) | 0.5 | 0.5 | 0.5 |
| $T_{IN}$ (°C) | 178 | 178 | 178 |
| Pressure (ATM) | 5 | 5 | 5 |

(continued)

| Reaction conditions | Test 4A | Test 4B | Test 4C |
|---|---|---|---|
| Glycerine flow-rate (ml/min) | 10 | 10 | 10 |
| $O_2/C$ (mol/mol) | 0.45 | 0.48 | 0.51 |
| S/C (mol/mol) | 0.20 | 0.20 | 0.20 |
| GHSV (Nl/kg*h) | 58,000 | 59,000 | 60,000 |
| $O_2$ in enriched air (%) | 55 | 55 | 55 |
| Reactivity parameters | | | |
| $T_{OUT}$ (°C) | 741 | 757 | 780 |
| $CH_4$ conversion (%) | 48.8 | 61.4 | 75.3 |
| CO selectivity (%) | 71.6 | 73.0 | 74.7 |
| $H_2$ selectivity (%) | 87.3 | 86.8 | 86.1 |
| $O_2$ consumed (mol/mol) | 0.26 | 0.26 | 0.26 |

Example 5

Tests 5A-5C refer to tests in which the starting oxygenated compound is ethylene glycol (EG). The ethylene glycol was fed in liquid form to the nebulization/vaporization device, using a mixture of methane and vapour as propellant.

Table 5 indicates the reaction conditions and reactivity parameters measured for tests 5A-5C.

When the reaction is carried out with an $O_2/C$ ratio = 0.31 mol/mol, the complete conversion of the ethylene glycol is observed, whereas the conversion of methane is very low. The synthesis gas obtained is therefore characterized by a relatively high residual methane component (14% by volume with respect to the dry gas) When the reaction is carried out with an $O_2/C$ ratio = 0.45, a methane residue of about 3% vol. is observed in the dry effluent.

The selectivity values observed for the CO and $H_2$ components of the synthesis gas produced in relation to the $O_2/C$ ratio in the reagent mixture are indicated in Figure 9.

Table 5

| Reaction conditions | Test 5A | Test 5B | Test 5C |
|---|---|---|---|
| $C_{methane}/C_{EG}$ (mol/mol) | 0.5 | 0.5 | 0.5 |
| $T_{IN}$ (°C) | 161 | 160 | 160 |
| Pressure (ATM) | 5 | 5 | 5 |
| Glycerine flow-rate (ml/min) | 10 | 10 | 10 |
| $O_2/C$ (mol/mol) | 0.31 | 0.40 | 0.45 |
| S/C (mol/mol) | 0.20 | 0.20 | 0.20 |
| GHSV (Nl/kg*h) | 53,200 | 57,630 | 59,170 |
| $O_2$ in enriched air (%) | 57 | 57 | 57 |
| Reactivity parameters | | | |
| $T_{OUT}$ (°C) | 675 | 720 | 759 |
| $CH_4$ conversion (%) | 12.2 | 51.7 | 75.8 |
| CO selectivity (%) | 52.8 | 60.7 | 65.6 |
| $H_2$ selectivity (%) | 77.0 | 77.8 | 78.0 |
| $O_2$ consumed (mol/mol) | 0.26 | 0.26 | 0.25 |

Fig.1-    Curve of the glycerine vapour pressure, which indicates that at pressures higher than 2 ATM the glycerine remains in the liquid state below 500°C.

Fig.2-    Scheme of the zones forming the catalytic partial oxidation reactor with a low contact time of the oxygenated compounds deriving from the biomasses

Fig.3A- Effect of the $O_2/C$. ratio on the selectivities to CO and $H_2$. The data refer to the adiabatic equilibrium under the following operating conditions: P=10 ATM, S/C=0, $C_{CH4}/C_{glycerine}$=0, $O_2$ in the oxidizing stream=50 % v/v

Fig.3B- Effect of the $O_2/C$ ratio on the selectivities to CO and $H_2$. The data refer to the adiabatic equilibrium under the following operating conditions: P=10 ATM, S/C=0.2, $C_{CH4}/C_{glycerine}$=0, $O_2$ in the oxidizing stream=50 % v/v

Fig.4A- Effect of the $O_2/C$ ratio on the selectivities to CO and $H_2$. The data refer to the adiabatic equilibrium under the following operating conditions: P=10 ATM, S/C= 0, $C_{CH4}/C_{glycerine}$=0.5, $O_2$ in the oxidizing stream=50 % v/v

Fig.4B- Effect of the $O_2/C$ ratio on the selectivities to CO e $H_2$. The data refer to the adiabatic equilibrium under the following operating conditions: P=10 ATM, S/C=0.2, $C_{CH4}/C_{glycerine}$=0.5, $O_2$ in the oxidizing stream=50 % v/v

Fig. 6- Effect of the $O_2/C$ ratio on the selectivities to CO and $H_2$. The data refer to the adiabatic equilibrium under the following operating conditions: P=10 ATM, S/C=0.2, $C_{CH4}/C_{glycerine}$=0, $O_2$ in the oxidizing stream=50 % v/v

Fig.7- Variations in the selectivity observed in the reactivity tests of Example 3 with a variation in the $O_2/C$ ratio in the reagents mixtures

Fig.8- Variations in the selectivity observed in the reactivity tests of Example 4 with a variation in the $O_2/C$ ratio in the reagents mixtures

Fig.9- Variations in the selectivity observed in the reactivity tests of Example 5 with avariation in the $O_2/C$ ratio in the reagents mixtures

**Claims**

1. A catalytic partial oxidation process for producing synthesis gas starting from oxygenated compounds deriving from bio- masses, comprising at least the following operative phase:

   reacting, in an suitable reactor, a reaction mixture comprising:

   a) one or more oxygenated compounds selected from glycerine, ethanol, tri-glycerides of fatty acids, carbohydrates having the general formula $C_n(H_2O)nH_2$ and/or mixtures thereof, preferably glycerine and/or ethylene glycol, even more preferably glycerine,
   b) an oxidant selected from oxygen, air, air enriched with oxygen,
   c) optionally a hydrocarbon propellant or vapour,

   wherein the ratio of moles of molecular oxygen/moles of carbon of the oxygenated compound plus that of the possible propellant ($O_2/C$) varies from 0.20 to 0.60 mol/mol,
   said reaction being effected at a temperature ranging from 450 to 1,100°C and a pressure varying from 1 to 50 ATM, with a GHSV (gas hourly space velocity) of between 10,000 and 1,000,000 Nl/(kg·hr), in the presence of a catalyst comprising one or more transition metals on a solid carrier.

2. The process according to claim 1, wherein the hydrocarbon propellant is selected from methane, LPG, naphtha and/or mixtures thereof.

3. The process according to claim 1 or 2, wherein the hydrocarbon propellant is present in such a concentration that the $C_{propemant}/C_{ox}$ ratio in the reaction mixture ranges from 0 to 2, preferably from 0 to 1 mol/mol.

4. The process according to any of the claims from 1 to 3, wherein the vapour is present in such a concentration that the S/C ratio in the reaction mixture ranges from 0.10 to 1.5, preferably from 0.15 to 0.80 mol/mol.

5. The process according to any of the claims from 1 to 4, wherein the space velocity ranges from 20,000 to 500,000 Nl/(kg*h).

6. The process according to any of the claims from 1 to 5, wherein the oxidant is present in such a concentration that the $O_2/C$ ratio in the reaction mixture ranges from 0.25 to 0.55 mol/mol.

7.  The process according to any of the claims from 1 to 6, wherein the oxidant is air enriched in oxygen wherein the oxygen content ($O_2$) varies from 40 to 60% v/v.

8.  The process according to any of the claims from 1 to 7, wherein the solid carrier of the catalyst is an oxide compound selected from aluminum oxides, mixed aluminum and magnesium oxides, perovskites, pyrochlores, Zr oxides, Ce oxides, La oxides, nitrides and oxynitrides containing Si, carbides and oxycarbides containing Si, Fe-Cr alloys and/or mixtures thereof, preferably alpha-alumina.

9.  The process according to any of the claims from 1 to 8, wherein the transition metals are selected from Ni, Co, Fe, Cu, Rh, Ru, Ir, Pt, Pd, Au and/or mixtures thereof, preferably Rh.

10. The process according to any of the claims from 1 to 9, wherein the catalyst is a catalyst based on rhodium, supported on alpha-alumina.

11. The process according to any of the claims from 1 to 10, wherein the content of transition metals in the catalyst ranges from 0.10 to 5% by weight with respect to the total weight of the catalyst, preferably from 0.5 to 2%.

## Fig. 1

## Fig. 2

## Fig. 3A

## Fig. 3B

# Fig. 4A

# Fig. 4B

Fig. 5

# Fig. 6

# Fig. 7

## Fig. 8

## Fig. 9

| | Europäisches Patentamt<br>European Patent Office<br>Office européen des brevets | **EUROPEAN SEARCH REPORT** | Application Number<br>EP 08 16 9549 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/013759 A1 (JIANG YI [US] ET AL) 19 January 2006 (2006-01-19) * paragraphs [0029], [0033], [0036]; claims 16-19,25 * | 1-11 | INV.<br>C01B3/32 |
| A | WO 2006/034868 A (ENI SPA [IT]; ENITECNOLOGIE SPA [IT]; BARTOLINI ANDREA [IT]; BASINI LU) 6 April 2006 (2006-04-06) * claim 17; figure 1 * | 1 | |
| Y | WO 01/46069 A (SHELL INT RESEARCH [NL]; SCHADDENHORST DAVID [NL]; SCHOONEBEEK RONALD) 28 June 2001 (2001-06-28) * page 4, line 3 - page 5, line 27 * | 1-6,8,9, 11 | |
| Y | EP 0 303 438 A (DAVY MCKEE CORP [US]) 15 February 1989 (1989-02-15) * column 6, line 46 - column 7, line 20; claims 1,2,511,12,13 * | 1-6,8,9, 11 | |
| X | US 2005/260123 A1 (DELUGA GREGG A [US] ET AL) 24 November 2005 (2005-11-24) * paragraphs [0009], [0031], [0032], [0035] - [0038], [0052], [0080] * | 1-6,8,9 | TECHNICAL FIELDS SEARCHED (IPC)<br>C01B |

The present search report has been drawn up for all claims

| Place of search | Date of completion of the search | Examiner |
|---|---|---|
| The Hague | 6 April 2009 | Galleiske, Anke |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 16 9549

This annex lists the patent family members relating to the patent documents cited in the above-mentioned European search report.
The members are as contained in the European Patent Office EDP file on
The European Patent Office is in no way liable for these particulars which are merely given for the purpose of information.

06-04-2009

| Patent document cited in search report | | Publication date | Patent family member(s) | | Publication date |
|---|---|---|---|---|---|
| US 2006013759 | A1 | 19-01-2006 | WO 2006017022 | A2 | 16-02-2006 |
| WO 2006034868 | A | 06-04-2006 | AT 420718 | T | 15-01-2009 |
| | | | CA 2577001 | A1 | 06-04-2006 |
| | | | EP 1796825 | A1 | 20-06-2007 |
| | | | US 2007278328 | A1 | 06-12-2007 |
| WO 0146069 | A | 28-06-2001 | AU 2367901 | A | 03-07-2001 |
| | | | JP 2003517986 | T | 03-06-2003 |
| | | | US 2002182142 | A1 | 05-12-2002 |
| EP 0303438 | A | 15-02-1989 | AR 244176 | A1 | 29-10-1993 |
| | | | AU 610219 | B2 | 16-05-1991 |
| | | | AU 2098988 | A | 16-02-1989 |
| | | | BR 8804093 | A | 07-03-1989 |
| | | | CN 1031511 | A | 08-03-1989 |
| | | | DK 453388 | A | 15-02-1989 |
| | | | IN 171834 | A1 | 23-01-1993 |
| | | | JP 1145301 | A | 07-06-1989 |
| | | | NO 883567 | A | 15-02-1989 |
| | | | NZ 225819 | A | 26-02-1990 |
| | | | SU 1831468 | A3 | 30-07-1993 |
| | | | ZA 8805994 | A | 31-01-1990 |
| US 2005260123 | A1 | 24-11-2005 | NONE | | |

EPO FORM P0459

For more details about this annex : see Official Journal of the European Patent Office, No. 12/82

## REFERENCES CITED IN THE DESCRIPTION

**Patent documents cited in the description**

- US 20050207971 A1
- US 20040022723 A1
- WO 200634868 A1
- US 5336655 A

**Non-patent literature cited in the description**

- **D.L. KLASS.** Biomass for renewable Energy, Fuels and Chemicals. Academic Press, 1998
- Green diesel production from vegetable oil. **T.L. MARKER ; PETER KOKAYEFF ; CHRIS GOSLING ; GIOVANNI FARACI ; CARLO PEREGO.** 10th Topical Conference on Refinery Processing. 07 AiChe Spring National Meeting Houston, 23 April 2007
- **L. BASINI.** Issues in H2 and Synthesis Gas Technologies for Refinery, GTL and Small and Distributed Industrial Needs. *Catalysis Today,* 2005, vol. 106, 34-40
- **J.R ROSTRUP-NIELSEN ; J. SEHESTED ; J.K. NOSKOV.** *Adv. Catal.,* 2002, vol. 47, 65-139
- **R. PITT.** *World Refining,* 2001, vol. 11 (1), 6
- **I. DYBKJAER.** *Petroleum Economist: Fundamental of Gas to Liquids,* 1993, 47-49
- **T. ROSTRUP-NIELSEN.** *Catalysis Today,* 2005, vol. 106 (1-4), 293-296
- **G. COLLODI.** *Hydroc. Eng.,* 2001, vol. 6 (8), 27
- **ATR - IB DYBKJAER.** *Hydrocarbon Engineering,* 2006, vol. 11 (7), 33-3436
- Structured Catalysts and Reactors. **CYBULSKI ; J.A. MULIJN.** Series Chemical Industries. Taylor and Francis CRC Press, 2006, vol. 110
- **G. GROPPI ; E. TRONCONI.** Honeycomb supports with high thermal conductivity for gas/solid chemical processes. *Catalysis Today,* 15 August 2005, vol. 105 (3-4), 297-304
- **L. GIANI ; C. CRISTIANI ; G. GROPPI ; E. TRONCONI.** *Applied Catalysis B: Environmental,* 2006, vol. 62, 121-131